# EUROPEAN PATENT APPLICATION

(11) **EP 4 845 189 A1**
(43) Date of publication of application: **25.11.2026**
(21) Application number: 25751322.6
(22) Date of filing: 24.01.2025
(51) Int. Cl.: H04W 8/08

(54) **COMMUNICATION METHOD AND APPARATUS**

(30) Priority: 08.02.2024 CN 202410178325
(71) Applicant: Huawei Technologies Co., Ltd., Shenzhen, Guangdong 518129 (CN)
(72) Inventor: ZHENG, Xiaochun, Shenzhen, Guangdong 518129 (CN); ZHU, Qianghua, Shenzhen, Guangdong 518129 (CN); LIAO, Ting, Shenzhen, Guangdong 518129 (CN); ZHANG, Ying, Shenzhen, Guangdong 518129 (CN)
(74) Representative: Huawei European IPR
(86) International application number: PCT/CN2025/074538
(87) International publication number: WO 2025/167720

(57) **Abstract**

A communication method and apparatus are provided. The method includes: A tag management function network element sends first information to a network repository function network element, where the first information includes information about an area corresponding to the tag management function network element; receives a first inventory request, where the first inventory request carries information about a target area, and the target area belongs to the area corresponding to the tag management function network element; determines a first device serving a target reader corresponding to the target area; and sends a second inventory request to the first device. The technical solutions provided in this application can implement network addressing from a requester to the reader.

## Description

This application claims priority to Chinese Patent Application No. 202410178325.2, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An ambient power-enabled internet of things (ambient power-enabled internet of things, AIoT) terminal may include a passive internet of things (passive internet of things, PIoT) terminal, and may further include an internet of things terminal with a sensing function (for example, a light, temperature, or humidity sensing function). Functions of the AIoT terminal are simple, and therefore the AIoT terminal needs to depend on external excitation to send information. The excitation is generally from a reader (also referred to as a card reader, Reader).

Current deployment of the reader and the terminal (also referred to as a tag) is characterized by a short communication distance, difficult management, and the like. In related technologies, a reader may be integrated into a base station, to implement functions of the reader on the base station. However, how a network finds an appropriate reader to access a tag is a problem to be resolved.

### SUMMARY

Embodiments of this application provide a communication method and apparatus, to implement network addressing from a requester to a reader.

According to a first aspect, an embodiment of this application provides a communication method. The method may be applied to a tag management function network element, and includes:
sending first information to a network repository function network element, where the first information includes information about an area corresponding to the tag management function network element;
receiving a first inventory request, where the first inventory request carries information about a target area, and the target area belongs to the area corresponding to the tag management function network element;
determining a first device serving a target reader corresponding to the target area; and
sending a second inventory request to the first device.

In the foregoing embodiment, the tag management function network element sends the first information to the network repository function network element, where the first information includes the information about the area corresponding to the tag management function network element. In this way, a mapping relationship between the area and the tag management function network element can be established on the network repository function network element, so that the network repository function network element can determine, based on the target area requested by a requester, a tag management function network element serving the target area. When the target area belongs to the area corresponding to the tag management function network element, the tag management function network element receives the first inventory request that carries the information about the target area, determines the target reader corresponding to the target area, determines the first device serving the target reader, and sends the second inventory request to the first device, to request the target reader to inventory a tag in the target area. In this way, mapping from the area to the tag management function network element, mapping from the area to the reader, and mapping from the reader to the first device can be implemented. This establishes a topology relationship from the requester-the tag management function network element-the first device-the reader, and implements network addressing from the requester to the reader.

In a possible implementation, the second inventory request carries information about the target reader.

In the foregoing implementation, the second inventory request carries the information about the target reader, so that the first device can send a subsequent inventory request to the target reader, and the target reader performs a corresponding inventory operation.

In a possible implementation, the second inventory request carries information about the target reader and the information about the target area.

In the foregoing implementation, when areas (namely, the target areas) that need to be inventoried are not all of areas covered by the target reader, the information about the target areas may be carried in the second inventory request, so that the target reader only needs to inventory the tags in the target areas, and does not perform inventory in an unnecessary area. This can accurately meet an area inventory requirement of a requester, and save communication resources.

In a possible implementation, the first inventory request further carries information about a target tag, and the second inventory request carries information about the target reader and the information about the target tag.

In the foregoing implementation, when a tag (namely, the target tag) that needs to be inventoried is not all of tags in the target area, the information about the target tag may be carried in the first inventory request and the second inventory request, so that the target reader only needs to inventory the target tag in the target area, and does not need to inventory an unnecessary tag. This can accurately meet a tag inventory requirement of the requester, and save communication resources.

In a possible implementation, the determining the first device serving the target reader corresponding to the target area includes:
determining, based on a first mapping relationship, the first device serving the target reader corresponding to the target area, where
the first mapping relationship includes a mapping relationship among a reader, an area, and a device serving the reader.

In the foregoing implementation, the first mapping relationship includes the mapping relationship between the reader and the area, and is used to determine the target reader corresponding to the target area. The first mapping relationship further includes the mapping relationship between the reader and the device serving the reader, and is used to determine the first device serving the target reader.

In a possible implementation, the device serving the reader includes an access and mobility management function network element and/or a radio access network device.

In a possible implementation, the method further includes:
receiving, from an access and mobility management function network element, a mapping relationship between a reader and an access and mobility management function network element serving the reader.

In the foregoing implementation, the tag management function network element can establish a mapping relationship between the reader and the access and mobility management function network element, to determine the access and mobility management function network element serving the target reader.

In a possible implementation, the method further includes:
receiving, from the access and mobility management function network element, an updated mapping relationship between a reader and the access and mobility management function network element serving the reader.

In the foregoing implementation, the tag management function network element can dynamically update the mapping relationship between the reader and the access and mobility management function network element, so that a network path from the tag management function network element to the access and mobility management function network element is more flexible and has better scalability, thereby better adapting to a requirement change.

In a possible implementation, the method further includes:
receiving, from a radio access network device, a mapping relationship between a reader and the radio access network device serving the reader.

In the foregoing implementation, the tag management function network element can establish the mapping relationship between the reader and the radio access network device, to determine the radio access network device serving the target reader.

In a possible implementation, the method further includes:
receiving, from the radio access network device, an updated mapping relationship between a reader and the radio access network device serving the reader.

In the foregoing implementation, the tag management function network element can dynamically update the mapping relationship between the reader and the radio access network device, so that a network path from the tag management function network element to the radio access network device is more flexible and has better scalability, thereby better adapting to a requirement change.

According to a second aspect, an embodiment of this application provides a communication method. The method may be applied to a network exposure function network element, and includes:
receiving a first inventory request, where the first inventory request carries information about a target area;
sending a query request to a network repository function network element, where the query request carries the information about the target area;
receiving response information returned by the network repository function network element, where the response information includes information about a target tag management function network element corresponding to the target area; and
sending a second inventory request to the target tag management function network element, where the second inventory request carries the information about the target area.

In the foregoing embodiment, the network exposure function network element sends, to the network repository function network element, the query request that carries the information about the target area, to query the target tag management function network element serving the target area; and sends, after determining the target tag management function network element, to the target tag management function network element, the inventory request that carries the information about the target area, to determine a target reader corresponding to the target area and a first device serving the target reader. In this way, mapping from the area to the tag management function network element, mapping from the area to the reader, and mapping from the reader to the first device can be implemented. This establishes a topology relationship from a requester-the tag management function network element-the first device-the reader, and implements network addressing from the requester to the reader.

According to a third aspect, an embodiment of this application provides a communication method. The method may be applied to a network exposure function network element, and includes:
receiving a first inventory request, where the first inventory request carries information about a target tag;
sending a query request to a unified data management network element, where the query request carries the information about the target tag;
receiving response information from the unified data management network element, where the response information includes information about a target tag management function network element corresponding to the target tag; and
sending a second inventory request to the target tag management network element, where the second inventory request carries the information about the target tag.

In the foregoing embodiment, the network exposure function network element sends, to the unified data management network element, the query request that carries the information about the target tag, to query the target tag management function network element serving the target tag; and sends, after determining the target tag management function network element, to the target tag management function network element, the inventory request that carries the information about the target tag, to determine a target reader corresponding to the target tag and a first device serving the target reader. In this way, mapping from the area to the tag management function network element, mapping from the area to the reader, and mapping from the reader to the first device can be implemented. This establishes a topology relationship from a requester-the tag management function network element-the first device-the reader, and implements network addressing from the requester to the reader.

In a possible implementation, the first inventory request and the second inventory request further carry information about a target area.

In the foregoing implementation, the first inventory request and the second inventory request further carry the information about the target area, and are used to determine a reader serving the target area, so as to determine the target reader corresponding to the target tag.

According to a fourth aspect, an embodiment of this application provides a communication method. The method may be applied to a network repository function network element, and includes:
receiving a query request from a network exposure function network element, where the query request carries information about a target area;
determining, based on a mapping relationship between an area and a tag management function network element, a target tag management function network element corresponding to the target area; and
sending response information to the network exposure function network element, where the response information includes information about the target tag management function network element.

In the foregoing embodiment, the network repository function network element can determine, based on the mapping relationship between the area and the tag management function network element in response to the query request that carries the information about the target area, the target tag management function network element corresponding to the target area. In this way, mapping from the area to the tag management function network element can be implemented, to find the target tag management function network element serving the target area.

In a possible implementation, the method further includes:
receiving, from a tag management function network element, a mapping relationship between the area and a tag management function network element.

In the foregoing implementation, the network repository function network element can establish the mapping relationship between the area and the tag management function network element, to determine the target tag management function network element serving the target area.

In a possible implementation, the method further includes:
receiving, from a tag management function network element, an updated mapping relationship between the area and a tag management function network element.

In the foregoing implementation, the network repository function network element can dynamically update the mapping relationship between the area and the tag management function network element, so that a network path from the area to the tag management function network element is more flexible and has better scalability, thereby better adapting to a requirement change.

According to a fifth aspect, an embodiment of this application provides a communication method. The method may be applied to a unified data management network element, and includes:
receiving a query request from a network exposure function network element, where the query request carries information about a target tag;
determining, based on a mapping relationship between a tag and a tag management function network element, a target tag management function network element corresponding to the target tag; and
sending response information to the network exposure function network element, where the response information includes information about the target tag management function network element.

In the foregoing embodiment, the unified data management network element can determine, based on the mapping relationship between the tag and the tag management function network element in response to the query request that carries the information about the target tag, the target tag management function network element corresponding to the target tag. In this way, mapping from the tag to the tag management function network element can be implemented, to find the target tag management function network element serving the target tag.

In a possible implementation, the method further includes: configuring the mapping relationship between the tag and the tag management function network element.

In the foregoing implementation, the unified data management network element can establish the mapping relationship between the tag and the tag management function network element, to determine the target tag management function network element serving the target tag.

In a possible implementation, the method further includes: updating the mapping relationship between the tag and the tag management function network element.

In the foregoing implementation, the unified data management network element can dynamically update the mapping relationship between the tag and the tag management function network element, so that a network path from the tag to the tag management function network element is more flexible and has better scalability, thereby better adapting to a requirement change.

According to a sixth aspect, an embodiment of this application provides a communication method. The method may be applied to a radio access network device, and includes:
receiving a first inventory request, where the first inventory request carries information about a target reader, and the target reader corresponds to a target area; and
sending a second inventory request to the target reader.

In the foregoing embodiment, the radio access network device can send, in response to the inventory request that carries the information about the target reader, the inventory request to the target reader, so that the target reader inventories a tag in the target area.

In a possible implementation, the first inventory request and the second inventory request carry information about the target area.

In the foregoing implementation, when areas (namely, the target areas) that need to be inventoried are not all of areas covered by the target reader, the information about the target areas may be carried in the first inventory request and the second inventory request, so that the target reader only needs to inventory the tags in the target areas, and does not perform inventory in an unnecessary area. This can accurately meet an area inventory requirement of a requester, and save communication resources.

In a possible implementation, the first inventory request and the second inventory request carry information about a target tag.

In the foregoing implementation, when a tag (namely, the target tag) that needs to be inventoried is not all of tags in the target area, the information about the target tag may be carried in the first inventory request and the second inventory request, so that the target reader only needs to inventory the target tag in the target area, and does not need to inventory an unnecessary tag. This can accurately meet a tag inventory requirement of a requester, and save communication resources.

In a possible implementation, receiving the first inventory request includes:
receiving the first inventory request from an access and mobility management function network element or a tag management function network element.

In the foregoing implementation, when the access and mobility management function network element and the tag management function network element are separately deployed, the radio access network device can receive the inventory request from the access and mobility management function network element. When the access and mobility management function network element and the tag management function network element are jointly deployed, the radio access network device may receive the inventory request from the tag management function network element.

In a possible implementation, the method further includes:
sending connection information to the access and mobility management function network element or the tag management function network element, where the connection information includes information about a reader corresponding to the radio access network device.

In the foregoing implementation, the radio access network device sends the connection information including the information about the reader to the access and mobility management function network element or the tag management function network element, so that the access and mobility management function network element or the tag management function network element can obtain the mapping relationship between the reader and the radio access network device.

In a possible implementation, the method further includes:
sending update information to the access and mobility management function network element or the tag management function network element, where the update information includes information about an updated reader corresponding to the radio access network device.

In the foregoing implementation, when the reader corresponding to the radio access network device is updated, the radio access network device can send update information including the information about the updated reader to the access and mobility management function network element or the tag management function network element, so that the access and mobility management function network element or the tag management function network element can dynamically update the mapping relationship between the reader and the radio access network device.

According to a seventh aspect, an embodiment of this application provides a communication method. The method may be applied to an access and mobility management function network element, and includes:
receiving a first inventory request, where the first inventory request carries information about a target reader, and the target reader corresponds to a target area; and
sending a second inventory request to a target radio access network device serving the target reader.

In the foregoing embodiment, the access and mobility management function network element can send, in response to the inventory request that carries the information about the target reader, the inventory request to the target radio access network device serving the target reader, to request the target reader to inventory a tag in the target area.

In a possible implementation, the first inventory request carries information about the target area, and the second inventory request carries information about the target area and information about the target reader.

In the foregoing implementation, when areas (namely, the target areas) that need to be inventoried are not all of areas covered by the target reader, the information about the target areas may be carried in the first inventory request and the second inventory request, so that the target reader only needs to inventory the tags in the target areas, and does not perform inventory in an unnecessary area. This can accurately meet an area inventory requirement of a requester, and save communication resources.

In a possible implementation, the first inventory request carries information about a target tag, and the second inventory request carries the information about the target reader and the information about the target tag.

In the foregoing implementation, when a tag (namely, the target tag) that needs to be inventoried is not all of tags in the target area, the information about the target tag may be carried in the first inventory request and the second inventory request, so that the target reader only needs to inventory the target tag in the target area, and does not need to inventory an unnecessary tag. This can accurately meet a tag inventory requirement of a requester, and save communication resources.

In a possible implementation, the method further includes:
receiving first connection information from a radio access network device, where the first connection information includes information about a reader corresponding to the radio access network device.

In the foregoing implementation, the access and mobility management function network element can establish a mapping relationship between the reader and the radio access network device, to determine the target radio access network device serving the target reader.

In a possible implementation, the method further includes:
receiving first update information from the radio access network device, where the first update information includes information about an updated reader corresponding to the radio access network device.

In the foregoing implementation, the access and mobility management function network element can dynamically update the mapping relationship between the reader and the radio access network device, so that a network path from the access and mobility management function network element to the radio access network device is more flexible and has better scalability, thereby better adapting to a requirement change.

In a possible implementation, the method further includes:
sending second connection information to a tag management function network element, where the second connection information includes information about a reader corresponding to the access and mobility management function network element.

In the foregoing implementation, the access and mobility management function network element sends the connection information including the information about the reader to the tag management function network element, so that the tag management function network element can obtain the mapping relationship between the reader and the access and mobility management function network element.

In a possible implementation, the method further includes:
sending second update information to the tag management function network element, where the second update information includes information about an updated reader corresponding to the access and mobility management function network element.

In the foregoing implementation, when the reader corresponding to the access and mobility management function network element is updated, the access and mobility management function network element can send update information including the information about the updated reader to the tag management function network element, so that the tag management function network element can dynamically update the mapping relationship between the reader and the radio access network device.

According to an eighth aspect, an embodiment of this application provides a communication method. The method includes:

A tag management function network element sends first information to a network repository function network element, where the first information includes information about an area corresponding to the tag management function network element;
a network exposure function network element receives a first inventory request, where the first inventory request carries information about a target area;
the network exposure function network element sends a query request to the network repository function network element, where the query request carries the information about the target area;
the network exposure function network element receives response information from the network repository function network element, where the response information includes information about the tag management function network element corresponding to the target area;
the network exposure function network element sends a second inventory request to the tag management function network element, where the second inventory request carries the information about the target area; and
the tag management function network element determines a first device serving a target reader corresponding to the target area, and sends a third inventory request to the first device.

According to a ninth aspect, an embodiment of this application provides a communication method. The method includes:

A network exposure function network element receives a first inventory request, where the first inventory request carries information about a target area and information about a target tag;
the network exposure function network element sends a query request to a unified data management network element, where the query request carries the information about the target tag;
the network exposure function network element receives response information from the unified data management network element, where the response information includes information about a tag management function network element corresponding to the target tag;
the network exposure function network element sends a second inventory request to the tag management function network element, where the second inventory request carries the information about the target area; and
the tag management function network element determines a first device serving a target reader corresponding to the target area, and sends a third inventory request to the first device.

According to a tenth aspect, an embodiment of this application provides a communication apparatus. The apparatus includes a module or unit configured to perform the method according to any one of the first aspect or the possible implementations of the first aspect.

In a possible implementation, the apparatus includes:
a transceiver unit, configured to send first information to a network repository function network element, where the first information includes information about an area corresponding to a tag management function network element; and
the transceiver unit is further configured to receive a first inventory request, where the first inventory request carries information about a target area, and the target area belongs to the area corresponding to the tag management function network element; and
a processing unit, configured to determine a first device serving a target reader corresponding to the target area, where
the transceiver unit is further configured to send a second inventory request to the first device.

In a possible implementation, the second inventory request carries information about the target reader.

In a possible implementation, the second inventory request carries information about the target reader and the information about the target area.

In a possible implementation, the first inventory request further carries information about a target tag, and the second inventory request carries information about the target reader and the information about the target tag.

In a possible implementation, when determining the first device serving the target reader corresponding to the target area, the processing unit is specifically configured to:
determine, based on a first mapping relationship, the first device serving the target reader corresponding to the target area, where
the first mapping relationship includes a mapping relationship among a reader, an area, and a device serving the reader.

In a possible implementation, the device serving the reader includes an access and mobility management function network element and/or a radio access network device.

In a possible implementation, the transceiver unit is further configured to receive, from an access and mobility management function network element, a mapping relationship between a reader and an access and mobility management function network element serving the reader.

In a possible implementation, the transceiver unit is further configured to receive, from the access and mobility management function network element, an updated mapping relationship between a reader and the access and mobility management function network element serving the reader.

In a possible implementation, the transceiver unit is further configured to receive, from a radio access network device, a mapping relationship between a reader and the radio access network device serving the reader.

In a possible implementation, the transceiver unit is further configured to receive, from the radio access network device, an updated mapping relationship between a reader and the radio access network device serving the reader.

According to an eleventh aspect, an embodiment of this application provides a communication apparatus. The apparatus includes a module or unit configured to perform the method according to the second aspect.

In a possible implementation, the apparatus includes:
a transceiver unit, configured to receive a first inventory request, where the first inventory request carries information about a target area;
the transceiver unit is further configured to send a query request to a network repository function network element, and the query request carries the information about the target area;
the transceiver unit is further configured to receive response information returned by the network repository function network element, where the response information includes information about a target tag management function network element corresponding to the target area; and
the transceiver unit is further configured to send a second inventory request to the target tag management function network element, where the second inventory request carries the information about the target area.

According to a twelfth aspect, an embodiment of this application provides a communication apparatus. The apparatus includes a module or unit configured to perform the method according to any one of the third aspect or the possible implementations of the third aspect.

In a possible implementation, the apparatus includes:
a transceiver unit, configured to receive a first inventory request, where the first inventory request carries information about a target tag;
the transceiver unit is further configured to send a query request to a unified data management network element, where the query request carries the information about the target tag;
the transceiver unit is further configured to receive response information from the unified data management network element, where the response information includes information about a target tag management function network element corresponding to the target tag; and
the transceiver unit is further configured to send a second inventory request to the target tag management network element, where the second inventory request carries the information about the target tag.

In a possible implementation, the first inventory request and the second inventory request further carry information about a target area.

According to a thirteenth aspect, an embodiment of this application provides a communication apparatus. The apparatus includes a module or unit configured to perform the method according to any one of the fourth aspect or the possible implementations of the fourth aspect.

In a possible implementation, the apparatus includes:
a transceiver unit, configured to receive a query request from a network exposure function network element, where the query request carries information about a target area; and
a processing unit, configured to determine, based on a mapping relationship between an area and a tag management function network element, a target tag management function network element corresponding to the target area, where
the transceiver unit is further configured to send response information to the network exposure function network element, where the response information includes information about the target tag management function network element.

In a possible implementation, the transceiver unit is further configured to receive, from a tag management function network element, a mapping relationship between the area and a tag management function network element.

In a possible implementation, the transceiver unit is further configured to receive, from a tag management function network element, an updated mapping relationship between the area and a tag management function network element.

According to a fourteenth aspect, an embodiment of this application provides a communication apparatus. The apparatus includes a module or unit configured to perform the method according to any one of the fifth aspect or the possible implementations of the fifth aspect.

In a possible implementation, the apparatus includes:
a transceiver unit, configured to receive a query request from a network exposure function network element, where the query request carries information about a target tag; and
a processing unit, configured to determine, based on a mapping relationship between a tag and a tag management function network element, a target tag management function network element corresponding to the target tag, where
the transceiver unit is further configured to send response information to the network exposure function network element, where the response information includes information about the target tag management function network element.

In a possible implementation, the processing unit is further configured to: configure the mapping relationship between the tag and the tag management function network element.

In a possible implementation, the processing unit is further configured to update the mapping relationship between the tag and the tag management function network element.

According to a fifteenth aspect, an embodiment of this application provides a communication apparatus. The apparatus includes a module or unit configured to perform the method according to any one of the sixth aspect or the possible implementations of the sixth aspect.

In a possible implementation, the apparatus includes:
a transceiver unit, configured to receive a first inventory request, where the first inventory request carries information about a target reader, and the target reader corresponds to a target area; and
the transceiver unit is further configured to send a second inventory request to the target reader.

In a possible implementation, the first inventory request and the second inventory request carry information about the target area.

In a possible implementation, the first inventory request and the second inventory request carry information about a target tag.

In a possible implementation, when receiving the first inventory request, the transceiver unit is specifically configured to receive the first inventory request from an access and mobility management function network element or a tag management function network element.

In a possible implementation, the transceiver unit is further configured to send connection information to the access and mobility management function network element or the tag management function network element, where the connection information includes information about a reader corresponding to a radio access network device.

In a possible implementation, the transceiver unit is further configured to send update information to the access and mobility management function network element or the tag management function network element, where the update information includes information about an updated reader corresponding to a radio access network device.

According to a sixteenth aspect, an embodiment of this application provides a communication apparatus. The apparatus includes a module or unit configured to perform the method according to any one of the seventh aspect or the possible implementations of the seventh aspect.

In a possible implementation, the apparatus includes:
a transceiver unit, configured to receive a first inventory request, where the first inventory request carries information about a target reader, and the target reader corresponds to a target area; and
the transceiver unit is further configured to send a second inventory request to a target radio access network device serving the target reader.

In a possible implementation, the first inventory request carries information about the target area, and the second inventory request carries information about the target area and information about the target reader.

In a possible implementation, the first inventory request carries information about a target tag, and the second inventory request carries the information about the target reader and the information about the target tag.

In a possible implementation, the transceiver unit is further configured to receive first connection information from a radio access network device, where the first connection information includes information about a reader corresponding to the radio access network device.

In a possible implementation, the transceiver unit is further configured to receive first update information from the radio access network device, where the first update information includes information about an updated reader corresponding to the radio access network device.

In a possible implementation, the transceiver unit is further configured to send second connection information to a tag management function network element, where the second connection information includes information about a reader corresponding to an access and mobility management function network element.

In a possible implementation, the transceiver unit is further configured to send second update information to the tag management function network element, where the second update information includes information about an updated reader corresponding to an access and mobility management function network element.

According to a seventeenth aspect, an embodiment of this application provides a communication apparatus. The communication apparatus includes a processor, the processor is configured to execute a computer program or instructions, and when the processor executes the computer program or the instructions, the method according to any one of the first aspect to the ninth aspect or the possible implementations of the first aspect to the ninth aspect is implemented. Optionally, the communication apparatus further includes a memory. Optionally, the communication apparatus further includes a communication interface, and the processor is coupled to the communication interface.

According to an eighteenth aspect, an embodiment of this application provides a computer-readable storage medium. The computer-readable storage medium stores a computer program or instructions, and when the computer program or the instructions are executed, the method according to any one of the first aspect to the ninth aspect or the possible implementations of the first aspect to the ninth aspect is implemented.

According to a nineteenth aspect, an embodiment of this application provides a computer program product. The computer program product includes a computer program or instructions, and when the computer program or the instructions are executed, the method according to any one of the first aspect to the ninth aspect or the possible implementations of the first aspect to the ninth aspect is implemented.

According to a twentieth aspect, an embodiment of this application provides a chip. The chip includes a processor, the processor is configured to execute a computer program or instructions, and when the processor executes the computer program or the instructions, the chip is enabled to perform the method according to any one of the first aspect to the ninth aspect or the possible implementations of the first aspect to the ninth aspect is implemented. Optionally, the chip further includes a communication interface, and the communication interface is configured to receive a signal or send a signal.

According to a twenty-first aspect, an embodiment of this application provides a chip. The chip includes a logic circuit and an input/output interface, the logic circuit is configured to: be coupled to the input/output interface, and transmit data through the input/output interface, to perform the method according to any one of the first aspect to the ninth aspect or the possible implementations of the first aspect to the ninth aspect.

According to a twenty-second aspect, an embodiment of this application provides a communication system. The communication system includes the communication apparatus according to any one of the tenth aspect to the seventeenth aspect or the possible implementations of the tenth aspect to the seventeenth aspect.

According to a twenty-third aspect, an embodiment of this application provides a communication system. The communication system includes a tag management function network element and a network exposure function network element, the tag management function network element is configured to perform the method according to any one of the first aspect or the possible implementations of the first aspect, and the network exposure function network element is configured to perform the method according to any one of the second aspect and the third aspect or the possible implementations of the second aspect and the third aspect.

Optionally, the communication system further includes at least one of a network repository function network element, a unified data management network element, a radio access network device, and an access and mobility management function network element. The network repository function network element is configured to perform the method according to any one of the fourth aspect or the possible implementations of the fourth aspect. The unified data management network element is configured to perform the method according to any one of the fifth aspect or the possible implementations of the fifth aspect. The radio access network device is configured to perform the method according to any one of the sixth aspect or the possible implementations of the sixth aspect. The access and mobility management function network element is configured to perform the method according to any one of the seventh aspect or the possible implementations of the seventh aspect.

For beneficial effect brought by the eighth aspect to the twenty-third aspect, refer to the descriptions of the beneficial effect according to the first aspect to the seventh aspect. Details are not described herein again.

In addition, in a process of performing the method according to any one of the first aspect to the ninth aspect or the possible implementations of the first aspect to the ninth aspect, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

According to the foregoing principle, for example, sending the information mentioned in the foregoing method may be understood as outputting the information by the processor. For another example, receiving the information may be understood as receiving the input information by the processor.

Optionally, operations such as transmission, sending, and receiving related to the processor may be more generally understood as operations such as outputting, receiving, and inputting of the processor, unless otherwise specified, or provided that the operations do not contradict actual functions or internal logic of the operations in related descriptions.

Optionally, in a process of performing the method according to any one of the first aspect to the ninth aspect or the possible implementations of the first aspect to the ninth aspect, the processor may be a processor specially configured to perform the method, or may be a processor, for example, a general-purpose processor, that performs the method by executing computer instructions in a memory. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

### BRIEF DESCRIPTION OF DRAWINGS

To describe technical solutions in embodiments of this application more clearly, the following briefly describes the accompanying drawings used in embodiments of this application.
FIG. 1 is a diagram of an inventory procedure of RFID tags;
FIG. 2 is a diagram of a network architecture of a communication system according to an embodiment of this application;
FIG. 3 is a schematic flowchart of a communication method according to an embodiment of this application;
FIG. 4 is a schematic flowchart of another communication method according to an embodiment of this application;
FIG. 5 is a diagram of a structure of a communication apparatus according to an embodiment of this application;
FIG. 6 is a diagram of a structure of another communication apparatus according to an embodiment of this application;
FIG. 7 is a diagram of a structure of still another communication apparatus according to an embodiment of this application; and
FIG. 8 is a diagram of a structure of a chip according to an embodiment of this application.

### DESCRIPTION OF EMBODIMENTS

The following describes technical solutions in embodiments of this application with reference to the accompanying drawings in embodiments of this application.

In this application, the term "example", "for example", or the like is used to give an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

"First", "second", and the like mentioned in embodiments of this application do not limit a quantity and an execution sequence, and "first", "second", and the like are not necessarily different. In addition, terms such as "include", "including", and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. A person skilled in the art can explicitly and implicitly understand that in embodiments of this application, unless otherwise specified or there is a logical conflict, terms and/or description in embodiments are consistent and may be mutually referenced, and technical features in different embodiments may be combined into a new embodiment based on an inner logical relationship between the technical features.

It should be understood that, in this application, "at least one" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In the descriptions of this application, an "indication" may include a direct indication and an indirect indication, or may include an explicit indication and an implicit indication. Information indicated by a piece of information is referred to as to-be-indicated information. In a specific implementation process, there are a plurality of manners of indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, specific information may alternatively be indicated by using an arrangement sequence of various pieces of information that is pre-agreed on (for example, stipulated in a protocol), to reduce indication overheads to some extent.

For ease of understanding embodiments of this application, a related technology of an ambient power-enabled internet of things (ambient power-enabled internet of things, AIoT) terminal is first described. The AIoT terminal may include a passive internet of things (passive internet of things, PIoT) terminal, and may further include an internet of things terminal with a sensing function (for example, a light, temperature, or humidity sensing function).

The AIoT terminal, for example, a radio frequency identification (Radio Frequency Identification, RFID) tag, is mainly used in the following application scenarios.
1. Logistics and warehousing, including goods inventory and tracking, and goods transportation environment and goods status monitoring.
2. Industrial manufacturing, including environment and device status monitoring.

With technology development and environmental protection requirements, the AIoT terminals are being deployed at a much larger scale. For example, forecasts predict they will reach hundreds of billions in the future. However, passive or semi-passive terminals have simple functions, so they rely on external excitation to send information. The excitation is generally from a reader (also referred to as a card reader, Reader). The reader has an inventory capability, for example, may perform operations such as reading, writing, destroying, and locking on tags (TAGs, or Labels) or transponders (Transponders).

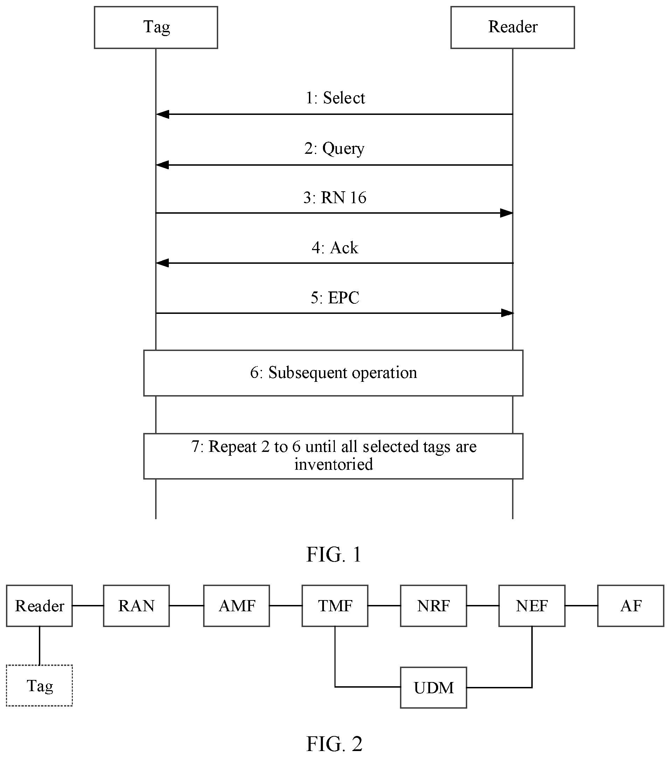

FIG. 1 is a diagram of an inventory procedure of RFID tags. The inventory procedure may include the following steps.
1: A reader (Reader) selects, by using a select (Select) command, tags (TAG) to be inventoried.
2: The reader starts an inventory cycle by running a query (Query) command, where all the tags selected by using the select command can be inventoried within the inventory cycle. The 1^{st} command in the inventory cycle is the query command, and subsequent commands are a query repeat (QueryRep) command or a query adjustment (QueryAdjust) command, where he query command, the QueryRep command, and the QueryAdjust command may all be referred to as inventory commands. An inventory command may carry a Q value, used by a tag to generate a Q-bit random number (random number, RN). The tag determines, based on the random number, whether to respond to the inventory command.
3: If the tag responds to the inventory command, the tag selects a 16-bit random number (RN 16), and sends the RN 16 to the reader.
4: If the reader receives a random number RN, the reader sends an acknowledgment (Acknowledgement, Ack) response to the tag, where the Ack carries the RN.
5: The tag matches the RN in the Ack with the RN 16 sent previously; if the RN is the same as the RN 16, a random access process succeeds. In this case, a connection is successfully established between the tag and the reader, and the tag sends an electronic product code (electronic product code, EPC) to the reader.
6: The reader may perform subsequent operations on the tag, for example, read information from the tag, write information into the tag, authenticate the tag, and the like.
7: After completing operations on the tag, the reader repeats the foregoing step 2 to step 6 to read and write a next tag until all the selected tags are inventoried.

In other words, "inventory" may be understood as that a reader establishes a connection to a tag, and performs a read or write operation on the tag. Specifically, the reader may inventory the tag by using the procedure shown in FIG. 1. Details are not described subsequently in embodiments of this application.

However, current deployment of the reader and a terminal (also referred to as a tag) is characterized by a short communication distance, difficult management, and the like. In related technologies, a reader may be integrated into a base station, to implement functions of the reader on the base station. This helps to increase a communication distance between the reader and a terminal and implement unified management on the terminal. For an active terminal (also referred to as an active tag), the active terminal has an active registration mechanism, and has a unique network address after being registered with a network. Access to the active tag may be implemented according to the network address. For a passive terminal (also referred to as a passive tag), how to find an appropriate reader to access the passive tag is a problem to be resolved.

To resolve the foregoing problem, embodiments of this application provide a communication method and apparatus, to implement network addressing from a requester to a reader.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a 5th generation (5th generation, 5G) mobile communication system, a new radio (new radio, NR) system, a machine to machine (machine to machine, M2M) communication system, or another future evolved communication system. This is not limited in embodiments of this application.

FIG. 2 is a diagram of a network architecture of a communication system according to an embodiment of this application. As shown in FIG. 2, the network architecture may include a tag management function (tag management function, TMF) network element, an access and mobility management function (access and mobility management function, AMF) network element, a network exposure function (network exposure function, NEF) network element, a network repository function (network repository function, NRF) network element, a unified data management (unified data management, UDM) network element, an application function (application function, AF) network element, and a radio access network (radio access network, RAN) device. The TMF may separately communicate with the AMF, the RAN, the NRF, the NEF, or the AF, for example, exchange information through an interface.

Optionally, the TMF and another network element (for example, an AMF, a UDM, or an NEF) may be jointly deployed. Optionally, the AF and the NEF may be jointly deployed.

In embodiments of this application, the TMF may configure or update a mapping relationship between an area (Area) and a reader (Reader), may further establish, store, or update a mapping relationship between the reader and the AMF, may further establish, store, or update the mapping relationship between the reader and the RAN, and may further carry corresponding area information to request to register with the NRF to publish a tag management function service. In embodiments of this application, the area may represent an area covered by one or more readers, for example, a workshop in a factory. There may be one or more tags (TAG) within one area. It may be understood that for ease of understanding, in this application, TMF subsequently represents a network element having a tag management function, and the network element may alternatively have another name. This is not limited in this application.

The AMF may establish, store, or update the mapping relationship between the reader and the RAN. In a 5G mobile communication system, the network element may be an access and mobility management function (access and mobility management function, AMF) network element, mainly has functions such as mobility management and access authentication/authorization, and may be further responsible for transferring user policies between a terminal and a policy control function (policy control function, PCF) network element.

The NEF may receive an AF request, and query the NRF or the UDM for a TMF corresponding to the AF request. In a 5G mobile communication system, the network element may be a network exposure function (network exposure function, NEF) network element, mainly configured to expose services and capabilities of a 3rd generation partnership project (3rd generation partnership project, 3GPP) network function to the AF, and enable the AF to provide information for the 3GPP network function.

The NRF may receive, from the TMF, a registration request that carries the area information, and is configured to establish, store, or update the mapping relationship between the area and the TMF. The NRF may also receive a query request that carries the area information from the NEF, and return, to the NEF, the TMF corresponding to the query request. In a 5G mobile communication system, the network element may be a network repository function (network repository function, NRF) network element, and provides functions of service registration, service authorization, and service discovery, that is, responsible for network function service registration, status monitoring, and the like, to implement network function service automatic management, selection, and scalability, and allow each network function to discover a service provided by another network function.

The UDM may configure or update a mapping relationship between a tag and the TMF, and may further configure or update a mapping relationship between the tag and the AF. The UDM may further receive, from the NEF, a query request that carries tag information, and return, to the NEF, the TMF corresponding to the query request. In a 5G mobile communication system, the network element may be a unified data management (unified data management, UDM) network element, and is mainly configured to generate a 3rd generation partnership project (3rd generation partnership project, 3GPP) authentication and key agreement (authentication and key agreement, AKA) authentication certificate, process a user identification (user identification, user ID), and perform unified management on data related to functions such as subscription information-based access authorization, service network element registration management, and subscription information management.

The AF can send, to the NEF, a request from an application side. In a 5G mobile communication system, the network element may be an application function (application function, AF) network element, represents an application function of a third party or an operator, is an interface for the 5G mobile communication system to obtain external application data, and is mainly configured to transfer a requirement of the application side for a network side.

It should be noted that the network architecture shown in FIG. 2 is not limited to including only the network element shown in the figure, and may further include another network element that is not illustrated in the figure, for example, a user plane (user plane function, UPF) network element or a unified data repository (unified data repository, UDR) network element. This is not limited in embodiments of this application.

It should be understood that in FIG. 2, names of the network elements in embodiments of this application in the 5G mobile communication system are used as an example. In future communication, for example, in a 6th generation (the 6th generation, 6G) mobile communication system, the network elements in embodiments of this application may alternatively have other names. Alternatively, in future communication, for example, in a 6G mobile communication system, the network elements in embodiments of this application may be replaced with other entities or devices that have same functions. This is not limited in this application. Unified descriptions are provided herein, and details are not described below again.

In embodiments of this application, the tag (TAG) may also be referred to as an AIoT device, a terminal, an access terminal, a subscriber unit, a subscriber station, a mobile station, a mobile console, a remote station, a remote terminal, a mobile device, a user terminal, a wireless communication device, a user agent, a user apparatus, or a target terminal. The terminal may be a passive internet of things terminal, or may be a tag. The terminal may be a passive device. The passive device may be a passive tag. The passive tag may collect energy by using a backscattering technology, to receive and send a packet. The passive tag includes but is not limited to a terminal tag without a power supply, for example, radio frequency identification (radio frequency identification, RFID), Bluetooth, or Zigbee. The terminal may alternatively be a semi-passive device or an active device.

The active device may be a device having a wireless transceiver function, for example, a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G mobile communication system, or a terminal in a future evolved network.

The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, the radio access network device RAN may also be referred to as an access device. The RAN can manage radio resources, provide an access service for user equipment, and complete forwarding of user equipment data between the user equipment and a core network. The RAN may also be understood as a base station in a network, and the reader is deployed in the RAN.

For example, an access network device in embodiments of this application may be any communication device having a wireless transceiver function for communicating with the user equipment. The access network device includes but is not limited to a base station, a next-generation base station (the next-generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), or a transmission and reception point (transmission and reception point, TRP) or the like, or may be a gNB in a 5G mobile communication system, for example, an NR system, or a transmission point (TRP or TP), or one or a group of antenna panels of a base station in a 5G mobile communication system, or may be a network node that forms a gNB or a transmission point, for example, a baseband unit (BBU) or a distributed unit (distributed unit, DU). The base station may be a macro base station, a micro base station, a picocell base station, a small cell, a relay station, a balloon station, or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in a core network (core network, CN). This is not limited in this application.

It may be understood that the network architecture shown in FIG. 2 is an example for description, and a network architecture applicable to embodiments of this application is not limited thereto. Any network architecture that can implement functions of some or all of the foregoing devices is applicable to embodiments of this application. The communication method provided in embodiments of this application may relate to only some devices shown in FIG. 2, or may relate to a device not shown in FIG. 2. This is not limited in this application.

The following describes the communication method provided in embodiments of this application.

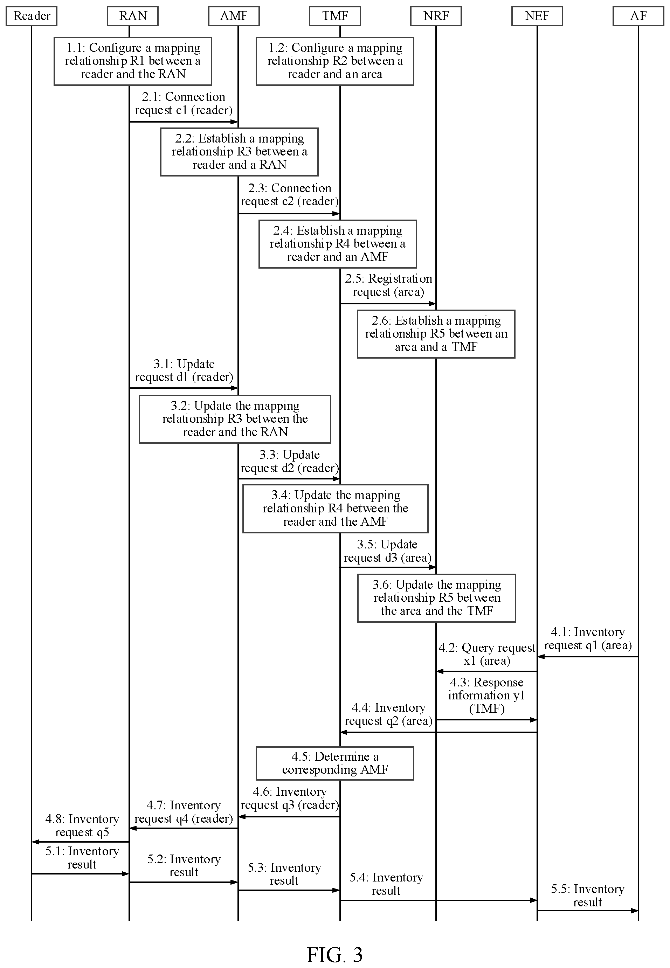

FIG. 3 is a schematic flowchart of a communication method according to an embodiment of this application. In the embodiment shown in FIG. 3, a procedure of interaction between an AF, an NEF, an NRF, a TMF, an AMF, and a RAN is used as an example to illustrate the method.

As shown in FIG. 3, the communication method may include but is not limited to the following step 1.1 to step 5.5.

1.1: The RAN configures a mapping relationship (denoted as a mapping relationship R1 for differentiation) between a reader and the RAN.

One RAN may serve one or more readers. In other words, one RAN may correspond to one or more readers. That is, the mapping relationship R1 between the reader and the RAN may be a one-to-one or many-to-one mapping relationship.

It may be understood that the mapping relationship in this application may also be expressed as a correspondence or an association relationship.

1.2: The TMF configures a mapping relationship (denoted as a mapping relationship R2 for differentiation) between the reader and an area.

One reader may cover one or more areas, and one area may also be covered by one or more readers. In other words, one reader may correspond to one or more areas, and one area may correspond to one or more readers. That is, the mapping relationship R2 between the reader and the area may be a one-to-one, one-to-many, or many-to-one mapping relationship. For example, a reader #1 corresponds to an area #1 and an area #2. It means that the reader #1 may inventory tags located in the area #1 and the area #2.

It should be understood that both the mapping relationship R1 and the mapping relationship R2 may be configured based on actual needs or circumstances, and correspondingly, may be updated based on variations of the actual needs or circumstances. This is not limited in embodiments of this application. In an implementation, the mapping relationship R1 and the mapping relationship R2 may be manually configured by operation and maintenance engineers.

2.1: The RAN sends a connection request (denoted as a connection request c1 for differentiation) to the AMF, and correspondingly, the AMF receives the connection request c1 from the RAN.

The connection request c1 may carry information about the reader corresponding to the RAN, to indicate the reader corresponding to the RAN. In other words, the RAN sends the connection request c1 to the AMF, to notify the AMF of the reader corresponding to the RAN. After receiving the connection request c1, the AMF can obtain, from the connection request c1, the reader corresponding to the RAN, that is, obtain the mapping relationship R1 between the reader and the RAN.

2.2: The AMF establishes a mapping relationship (denoted as a mapping relationship R3 for differentiation) between a reader and a RAN.

The AMF may receive connection requests from one or more RANs, obtain a reader corresponding to each RAN, and may establish the mapping relationship R3 between the reader and the RAN based on each RAN and the reader corresponding to the RAN. The mapping relationship R3 may be used to search for a RAN that meets requirements. The mapping relationship R3 may also be understood as being formed by one or more mapping relationships R1. Optionally, after establishing the mapping relationship R3, the AMF may further dynamically maintain and store the mapping relationship R3.

In some possible cases, the reader corresponding to the RAN changes (or "is updated"). For example, readers corresponding to the RAN may be added or removed, or replaced with different readers. For example, it is assumed that the RAN originally corresponds to one reader (denoted as a reader 1). If a reader (denoted as a reader 2) is newly deployed in the RAN, the readers corresponding to the RAN change from the reader 1 to the reader 1 and the reader 2. In other words, the readers corresponding to the RAN are updated. In other words, the mapping relationship R1 is updated. In this case, the RAN may resend a connection request (also referred to as an update request) to the AMF, for the AMF to update the mapping relationship R3.

In a possible implementation, the mapping relationship R3 may be updated in the following step 3.1 and step 3.2.

3.1: The RAN sends the update request (denoted as an update request d1 for differentiation) to the AMF, and correspondingly, the AMF receives the update request d1 from the RAN.

The update request d1 may carry information about the updated reader corresponding to the RAN, to indicate the updated reader corresponding to the RAN. In other words, the RAN sends the update request d1 to the AMF, to notify the AMF of the updated reader corresponding to the RAN, so that after receiving the update request d1, the AMF can obtain, from the update request d1, the updated reader corresponding to the RAN.

3.2: The AMF updates the mapping relationship R3 between the reader and the RAN.

After obtaining the updated reader corresponding to the RAN, the AMF may correspondingly update the mapping relationship R3 between the reader and the RAN, and store an updated mapping relationship R3.

In the foregoing implementation, the AMF can dynamically update the mapping relationship between the reader and the RAN, so that a network path from the AMF to the RAN is more flexible and has better scalability, thereby better adapting to a requirement change.

2.3: The AMF sends a connection request (denoted as a connection request c2 for differentiation) to the TMF, and correspondingly, the TMF receives the connection request c2 from the AMF.

The connection request c2 may carry information about a reader corresponding to the AMF, to indicate the reader corresponding to the AMF. In other words, the AMF sends the connection request c2 to the TMF, to notify the TMF of the reader corresponding to the AMF, so that after receiving the connection request c2, the TMF can obtain, from the connection request c2, the reader corresponding to the AMF. The reader corresponding to the AMF, also referred to as a reader served by the AMF, may be the reader included in the mapping relationship R3.

2.4: The TMF establishes a mapping relationship (denoted as a mapping relationship R4 for differentiation) between a reader and an AMF.

The TMF may receive connection requests from one or more AMFs, obtain a reader corresponding to each AMF, and may establish the mapping relationship R4 between the reader and the AMF based on each AMF and the reader corresponding to the AMF. The mapping relationship R4 may be used to search for an AMF that meets a requirement. Optionally, after establishing the mapping relationship R4, the TMF may further dynamically maintain and store the mapping relationship R4.

It may be understood that in this case, the TMF can learn of, based on the mapping relationship R2 and the mapping relationship R4, the AMF and the area that correspond to the reader. In other words, the TMF establishes a mapping relationship #1, where the mapping relationship #1 includes a mapping relationship between the reader, the AMF, and the area. The mapping relationship #1 may be specifically formed by the mapping relationship R2 and the mapping relationship R4, or may be formed by combining the mapping relationship R2 and the mapping relationship R4. For example, the mapping relationship #1 may include a mapping relationship table R2 and a mapping relationship table R4, which respectively reflect information about the mapping relationship R2 and information about the mapping relationship R4. Alternatively, the mapping relationship #1 may include a mapping relationship table #1, and the table #1 includes the mapping relationship between the reader, the AMF, and the area.

In some possible cases, the reader corresponding to the AMF changes (or is referred to as "is updated"). For example, readers corresponding to the AMF may be added or removed, or replaced with different readers. In this case, the AMF may resend a connection request (also referred to as an update request) to the TMF, so that the TMF updates the mapping relationship R4.

In a possible implementation, the mapping relationship R4 may be updated in the following step 3.3 and step 3.4.

3.3: The AMF sends the update request (denoted as an update request d2 for differentiation) to the TMF, and correspondingly, the TMF receives the update request d2 from the AMF.

The update request d2 may carry information about the updated reader corresponding to the AMF, to indicate the updated reader corresponding to the AMF. In other words, the AMF sends the update request d2 to the TMF, to notify the TMF of the updated reader corresponding to the AMF, so that after receiving the update request d2, the TMF can obtain, from the update request d2, the updated reader corresponding to the AMF. The updated reader corresponding to the AMF may be the reader included in the foregoing updated mapping relationship R3.

3.4: The TMF updates the mapping relationship R4 between the reader and the AMF.

After obtaining the updated reader corresponding to the AMF, the TMF may correspondingly update the mapping relationship R4 between the reader and the AMF, and store an updated mapping relationship R4.

In the foregoing implementation, the TMF can dynamically update the mapping relationship between the reader and the AMF, so that a network path from the TMF to the AMF is more flexible and has better scalability, thereby better adapting to a requirement change.

2.5: The TMF sends a registration request to the NRF, and correspondingly, the NRF receives the registration request from the TMF.

The registration request may carry information about an area corresponding to the TMF, to indicate the area corresponding to the TMF. In other words, the TMF sends the registration request to the NRF, to notify the NRF of the area corresponding to the TMF, so that after receiving the registration request, the NRF can obtain, from the registration request, the area corresponding to the TMF. The area corresponding to the TMF, also referred to as an area served by the TMF, may be the area included in the mapping relationship R2.

It may be understood that step 2.5 may be performed at any moment after step 1.2. This is not limited in this application.

2.6: The NRF establishes a mapping relationship (denoted as a mapping relationship R5 for differentiation) between an area and a TMF.

The NRF may receive registration requests from one or more TMFs, obtain an area corresponding to each TMF, and may establish the mapping relationship R5 between the area and the TMF based on each TMF and the area corresponding to the TMF. The mapping relationship R5 may be used to search for a TMF that meets a requirement. Optionally, after establishing the mapping relationship R5, the TMF may further dynamically maintain and store the mapping relationship R5.

In some possible cases, the area corresponding to the TMF changes (or is referred to as "is updated"). For example, a quantity of areas corresponding to the TMF increases or decreases, or the area becomes another different area. In this case, the TMF may resend a registration request (also referred to as an update request) to the NRF, so that the NRF updates the mapping relationship R5.

In a possible implementation, the mapping relationship R5 may be updated in the following step 3.5 and step 3.6.

3.5: The TMF sends the update request (denoted as an update request d3 for differentiation) to the NRF, and correspondingly, the NRF receives the update request d3 from the TMF.

The update request d3 may carry information about an updated area corresponding to the TMF, to indicate the updated area corresponding to the TMF. In other words, the TMF sends the update request d3 to the NRF, to notify the NRF of the updated area corresponding to the TMF, so that after receiving the update request d3, the NRF can obtain, from the update request d3, the updated area corresponding to the TMF.

3.6: The NRF updates the mapping relationship R5 between the area and the TMF.

After obtaining the updated area corresponding to the TMF, the NRF may correspondingly update the mapping relationship R5 between the area and the TMF, and store an updated mapping relationship R5.

In the foregoing implementation, the NRF can dynamically update the mapping relationship between the area and the TMF, so that a network path from a requester to the AMF is more flexible and has better scalability, thereby flexibly adapting to a requirement change.

Based on the foregoing procedure, required mapping relationships are configured on different nodes of a network.

After the above procedure, the following steps 4.1 to 4.8 are used to process an inventory request triggered by the requester AF.

4.1: The AF sends the inventory request (denoted as an inventory request q1 for differentiation) to the NEF, and correspondingly, the NEF receives the inventory request q1 from the AF.

The inventory request q1 may carry information about a target area. The target area is an area that needs to be inventoried, and there may be one or more target areas. The inventory request may be understood as being used to request to inventory a tag in the target area, or may be understood as being used to request or trigger the NEF to determine a TMF appropriate for the target area.

A name of the inventory request or a message carrying the inventory request is not limited in embodiments of this application, and details are not described below.

Optionally, the inventory request q1 may further carry identification information of the AF, used for authentication, for example, verifying whether the AF has permission to inventory the tag in the target area.

4.2: The NEF sends a query request (denoted as a query request x1 for differentiation) to the NRF, and correspondingly, the NRF receives the query request x1 from the NEF.

The query request x1 may carry the information about the target area, and is used to query a TMF (denoted as a target TMF) serving the target Area. There may be one or more target TMFs.

4.3: The NRF returns response information (denoted as response information y1 for differentiation) to the NEF, and correspondingly, the NEF receives the response information y1 from the NRF.

The NRF stores the mapping relationship R5 between the area and the TMF. Therefore, the TMF (namely, the target TMF) corresponding to the target area can be determined based on the mapping relationship R5 and the target area.

In some possible cases, there is one target area, and there is one TMF serving the target area. In this case, the target TMF is the TMF serving the target Area.

In some other possible cases, there is one target area, and there are a plurality of TMFs serving the target area. In this case, the target TMF may be one or more of the plurality of TMFs serving the target area.

In still other possible cases, there are a plurality of target areas, and the NRF may determine a TMF corresponding to each target area. Different target areas may correspond to a same TMF or different TMFs. In this case, there may be one or more target TMFs.

After determining the target TMF corresponding to the target area, the NRF may return the response information y1 to the NEF, where the response information y1 includes information about the target TMF, and is used to notify the NEF of the target TMF. Therefore, after receiving the response information y1, the NEF may obtain the target TMF from the response information y1.

4.4: The NEF sends an inventory request (denoted as an inventory request q2 for differentiation) to the target TMF, and correspondingly, the target TMF receives the inventory request q2 from the NEF.

The inventory request q2 may carry the information about the target area. The inventory request may be understood as being used to request or trigger the TMF to search for an AMF corresponding to a reader (denoted as a target reader) serving the target area, or may be understood as being used to request to inventory the tag in the target area. There may be one or more target readers.

4.5: The target TMF determines the AMF (denoted as a target AMF) serving the target reader.

The target TMF determines, based on the mapping relationship #1, the AMF serving the target reader. For details about the mapping relationship #1, refer to the description of the mapping relationship #1 in step 2.4.

Specifically, the target TMF may determine, in the following manner, the AMF serving the target reader. In the following manner, it may be understood that the mapping relationship #1 is formed by the mapping relationship R2 and the mapping relationship R4.

The mapping relationship R2 between the reader and the area is configured on the target TMF, and therefore the reader (namely, the target reader) corresponding to the target area can be determined based on the mapping relationship R2 and the target area.

In some possible cases, there is one target area, and the target area is covered by one reader. In this case, the target reader is the reader that covers the target area.

In some other possible cases, there is one target area, and the target area is jointly covered by a plurality of readers. In this case, the target reader may be the plurality of readers that jointly cover the target area.

In still other possible cases, there are a plurality of target areas, and the target TMF may determine a reader corresponding to each target area. Different target areas may correspond to a same reader or different readers. In this case, there may be one or more target readers.

The target TMF further stores the mapping relationship R4 between the reader and the AMF. After determining the target reader, the target TMF may determine, based on the mapping relationship R4 and the target reader, the AMF (denoted as the target AMF) corresponding to the target reader. There may be one or more target AMFs.

In some possible cases, there is one target reader, and there is one AMF serving the target reader. In this case, the target AMF is the AMF serving the target reader.

In some other possible cases, there is one target reader, and there are a plurality of AMFs serving the target reader. In this case, the target AMF may be one or more of the plurality of AMFs serving the target reader. Optionally, the target AMF may be selected from the plurality of AMFs according to a specific policy. For example, an AMF with a large capacity or a light load may be selected as the target AMF.

In still other possible cases, there are a plurality of target readers, the target TMF may determine an AMF corresponding to each target reader. Different target readers correspond to a same AMF or different AMFs. In this case, there may be one or more target AMFs.

4.6: The target TMF sends an inventory request (denoted as an inventory request q3 for differentiation) to the target AMF, and correspondingly, the target AMF receives the inventory request q3 from the target TMF.

The inventory request q3 may carry information about the target reader. The inventory request may be understood as being used to request or trigger the AMF to search for a RAN (denoted as a target RAN) serving the target reader, or may be understood as being used to request to inventory the tag by using the target reader. There may be one or more target RANs.

The target AMF stores the mapping relationship R3 between the reader and the RAN. Therefore, a RAN (namely, the target TMF) corresponding to the target reader can be determined based on the mapping relationship R3 and the target reader.

In some possible cases, there is one target reader, and there is one RAN serving the target reader. In this case, the target RAN is the RAN serving the target reader.

In some other possible cases, there are a plurality of target areas, and each target reader is served by one RAN. The target AMF may determine the RAN corresponding to each target reader. Different target readers may correspond a same RAN or different RANs. In this case, there may be one or more target RANs.

4.7: The target AMF sends an inventory request (denoted as an inventory request q4 for differentiation) to the target RAN, and correspondingly, the target RAN receives the inventory request q4 from the target AMF.

The inventory request q4 may carry the information about the target reader. The inventory request may be understood as being used to request or trigger the target RAN to select a corresponding reader to inventory the tag, or may be understood as being used to request to inventory the tag by using the target reader.

4.8: The target RAN sends an inventory request (denoted as an inventory request q5 for differentiation) to the target reader, and correspondingly, the target reader receives the inventory request q5 from the target RAN.

The inventory request q5 is used to request the target reader to inventory the tag. In response to the inventory request q5, the target reader inventories the tag that can be inventoried by the reader, to obtain an inventory result. For example, the inventory result may include but is not limited to a device identification, a device status, or environment information of the inventoried tag.

In a possible implementation, the inventory request q3 and the inventory request q4 further carry the information about the target area in addition to the information about the target reader. The inventory request q5 carries the information about the target area.

For example, when the target reader covers a plurality of areas, and the target areas are some of the plurality of areas covered by the target reader, that is, areas (namely, the target areas) that need to be inventoried are not all the areas covered by the target reader, in this case, the information about the target areas may be carried in the inventory request q3, the inventory request q4, and the inventory request q5, so that the target reader only needs to inventory tags in the target areas, and does not perform inventory in an unnecessary area. This can accurately meet an area inventory requirement of the requester, and save communication resources.

It may be understood that when the TMF and the AMF are jointly deployed, or a function of the TMF is deployed on the AMF, the TMF in the procedure shown in FIG. 3 may be replaced with the AMF, an interaction action between the TMF and the AMF does not need to be performed, and an action of configuring or updating the mapping relationship R4 does not need to be performed either. In this case, the AMF establishes a mapping relationship #2, and the mapping relationship #2 includes a mapping relationship between the reader, the RAN, and the area. For a specific form of the mapping relationship #2, refer to the foregoing description of the mapping relationship #1. Details are not described herein again. Step 4.5 and step 4.6 should be replaced with the following: The target AMF determines the RAN (denoted as the target RAN) serving the target reader. The target AMF determines, based on the mapping relationship #2, the RAN serving the target reader. For a process of determining the target RAN, refer to the process of determining the target AMF in step 4.5. Details are not described herein again.

In a possible implementation, in addition to the information about the target area, the inventory request q1 and the inventory request q2 further carry information about a target tag. In addition to the information about the target reader, the inventory request q3 and the inventory request q4 further carry the information about the target tag. The inventory request q5 carries the information about the target tag.

The target tag is the tag that needs to be inventoried. Optionally, the target tag may be some tags in the target area. For example, the target tag may be one or more tags in the target area. For another example, the target tag may be one or more groups of tags in the target area. In embodiments of this application, grouping information such as a tag grouping manner or a quantity of groups is not limited. In other words, the information about the target tag may be specifically tag group information.

When the tag (namely, the target tag) that needs to be inventoried is not all of tags in the target area, the information about the target tag may be carried in the inventory request q1, the inventory request q2, the inventory request q3, the inventory request q4, and the inventory request q5, so that the target reader only needs to inventory the target tag in the target area, and does not need to inventory an unnecessary tag. This can accurately meet a tag inventory requirement of the requester, and save communication resources.

The embodiment shown in FIG. 3 may further include the following steps:

5.1: The target reader sends an inventory result to the target RAN, and correspondingly, the target RAN receives the inventory result from the target reader.

After obtaining the inventory result in response to the inventory request q5 from the target RAN, the target reader may send the inventory result to the target RAN based on path information carried in the inventory request q5.

5.2: The target RAN sends the inventory result to the target AMF, and correspondingly, the target AMF receives the inventory result from the target RAN.

After receiving the inventory result from the target reader, the target RAN may send the inventory result to the target AMF based on path information carried in the inventory request q4.

5.3: The target AMF sends the inventory result to the target TMF, and correspondingly, the target TMF receives the inventory result from the target AMF.

After receiving the inventory result from the target RAN, the target AMF may send the inventory result to the target TMF based on path information carried in the inventory request q3.

5.4: The target TMF sends the inventory result to the NEF, and correspondingly, the NEF receives the inventory result from the target TMF.

After receiving the inventory result from the target AMF, the target TMF may send the inventory result to the NEF based on path information carried in the inventory request q2.

5.5: The NEF sends the inventory result to the AF, and correspondingly, the AF receives the inventory result from the NEF.

After receiving the inventory result from the target TMF, the NEF may send the inventory result to the AF based on path information carried in the inventory request q1.

In the foregoing embodiment, the TMF may configure/update the mapping relationship between the reader and the area, and open the area to the AF. The TMF may carry the area to publish a service to the NRF, so that the AF can carry the target area to query the NRF for the appropriate TMF. When being connected to the AMF, the RAN carries the reader corresponding to the RAN, so that the AMF can store/update the mapping relationship between the reader and the RAN. When being connected to the TMF, the AMF carries the reader corresponding to the AMF, so that the TMF can store/update the mapping relationship between the reader and the AMF. Therefore, the TMF establishes a dynamic topology relationship between TMF-AMF-RAN-reader and the area. This enables a dynamic search process spanning the entire workflow from the AF to the reader.

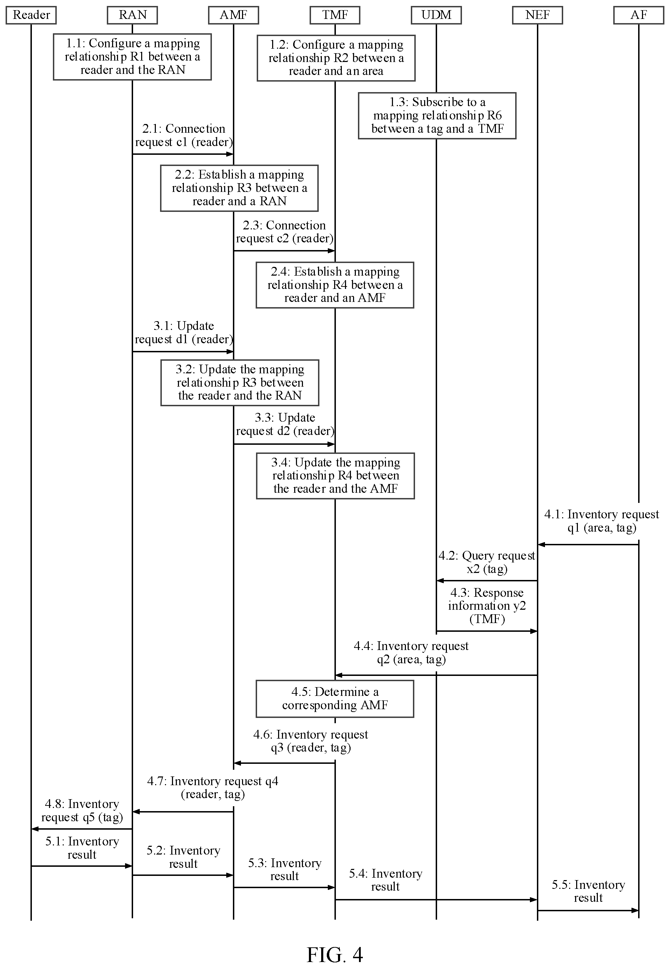

FIG. 4 is a schematic flowchart of another communication method according to an embodiment of this application. In the embodiment shown in FIG. 4, a procedure of interaction between an AF, an NEF, a UDM, a TMF, an AMF, and a RAN is used as an example to illustrate the method.

As shown in FIG. 4, the communication method may include but is not limited to the following step 1.1 to step 5.5.

1.1: The RAN configures a mapping relationship (denoted as a mapping relationship R1 for differentiation) between a reader and the RAN.

1.2: The TMF configures a mapping relationship (denoted as a mapping relationship R2 for differentiation) between a reader and an area.

For details of steps 1.1 and 1.2 in the embodiment in FIG. 4, refer to the descriptions of steps 1.1 and 1.2 in the embodiment in FIG. 3. Details are not described herein again.

1.3: The UDM subscribes to a mapping relationship (denoted as a mapping relationship R6 for differentiation) between a tag and a TMF.

One TMF may serve one or more tags, and one tag may also be served by one or more TMFs. In other words, one TMF may correspond to one or more tags, and one tag may correspond to one or more TMFs. That is, the mapping relationship R6 between the tag and the TMF may be a one-to-one, one-to-many, or many-to-one mapping relationship. Optionally, the mapping relationship R6 may also indicate a mapping relationship between a tag group and a TMF.

It should be understood that all of the mapping relationship R1, the mapping relationship R2, and the mapping relationship R6 may be configured based on an actual requirement or case, and correspondingly, may be updated based on a change of the actual requirement or case. This is not limited in embodiments of this application.

2.1: The RAN sends a connection request (denoted as a connection request c1 for differentiation) to the AMF, and correspondingly, the AMF receives the connection request c1 from the RAN.

2.2: The AMF establishes a mapping relationship (denoted as a mapping relationship R3 for differentiation) between a reader and a RAN.

In a possible implementation, the mapping relationship R3 may be updated in the following step 3.1 and step 3.2.

3.1: The RAN sends an update request (denoted as an update request d1 for differentiation) to the AMF, and correspondingly, the AMF receives the update request d1 from the RAN.

3.2: The AMF updates the mapping relationship R3 between the reader and the RAN.

2.3: The AMF sends a connection request (denoted as a connection request c2 for differentiation) to the TMF, and correspondingly, the TMF receives the connection request c2 from the AMF.

2.4: The TMF establishes a mapping relationship (denoted as a mapping relationship R4 for differentiation) between a reader and an AMF.

In a possible implementation, the mapping relationship R4 may be updated in the following step 3.3 and step 3.4.

3.3: The AMF sends an update request (denoted as an update request d2 for differentiation) to the TMF, and correspondingly, the TMF receives the update request d2 from the AMF.

3.4: The TMF updates the mapping relationship R4 between the reader and the AMF.

For details of steps 2.1 to 3.4 in the embodiment in FIG. 4, refer to the descriptions of steps 2.1 to 3.4 in the embodiment in FIG. 3. Details are not described herein again.

4.1: The AF sends an inventory request (denoted as an inventory request q1 for differentiation) to the NEF, and correspondingly, the NEF receives the inventory request q1 from the AF.

The inventory request q1 may carry information about a target area and information about a target tag, and is used to request to inventory the target tag in the target area. The target area is an area that needs to be inventoried, and the target tag is a tag that needs to be inventoried. There may be one or more target areas.

Optionally, the target tag may be some tags in the target area. For example, the target tag may be one or more tags in the target area. For another example, the target tag may be one or more groups of tags in the target area. In embodiments of this application, grouping information such as a tag grouping manner or a quantity of groups is not limited.

Optionally, the inventory request q1 may further carry identification information of the AF, used for authentication, for example, verifying whether the AF has permission to inventory the tag in the target area.

4.2: The NEF sends a query request (denoted as a query request x2 for differentiation) to the UDM, and correspondingly, the UDM receives the query request x2 from the NEF.

The query request x2 may carry the information about the target tag, and is used to query a TMF (denoted as a target TMF) serving the target tag. There may be one or more target TMFs.

4.3: The UDM returns response information (denoted as response information y2 for differentiation) to the NEF, and correspondingly, the NEF receives the response information y2 from the UDM.

The UDM stores a mapping relationship R5 between a tag and a TMF. Therefore, the TMF (namely, the target TMF) corresponding to the target tag can be determined based on the mapping relationship R5 and the target tag.

After determining the target TMF corresponding to the target tag, the UDM may return the response information y2 to the NEF, where the response information y2 includes information about the target TMF, and is used to notify the NEF of the target TMF. Therefore, after receiving the response information y2, the NEF may obtain the target TMF from the response information y2.

4.4: The NEF sends an inventory request (denoted as an inventory request q2 for differentiation) to the target TMF, and correspondingly, the target TMF receives the inventory request q2 from the NEF.

The inventory request q2 may carry the information about the target area and the information about the target tag, and is used to search for an AMF serving the reader (denoted as the target reader) corresponding to the target area. There may be one or more target readers.

4.5: The target TMF determines the AMF (denoted as a target AMF) serving the target reader.

The mapping relationship R2 between the reader and the area is configured on the target TMF, and therefore the reader (namely, the target reader) corresponding to the target area can be determined based on the mapping relationship R2 and the target area.

The target TMF further stores the mapping relationship R4 between the reader and the AMF. After determining the target reader, the target TMF may determine, based on the mapping relationship R4 and the target reader, the AMF (denoted as the target AMF) corresponding to the target reader. There may be one or more target AMFs.

4.6: The target TMF sends an inventory request (denoted as an inventory request q3 for differentiation) to the target AMF, and correspondingly, the target AMF receives the inventory request q3 from the target TMF.

The inventory request q3 may carry the information about the target reader and the information about the target tag, and is used to search for a RAN (denoted as a target RAN) serving the target reader. There may be one or more target RANs.

The target AMF stores the mapping relationship R3 between the reader and the RAN. Therefore, the RAN (namely, the target TMF) corresponding to the target reader can be determined based on the mapping relationship R3 and the target reader.

4.7: The target AMF sends an inventory request (denoted as an inventory request q4 for differentiation) to the target RAN, and correspondingly, the target RAN receives the inventory request q4 from the target AMF.

The inventory request q4 may carry the information about the target reader and the information about the target tag, and is used to notify the target RAN of readers that specifically need to be served, to inventory the target tag.

4.8: The target RAN sends an inventory request (denoted as an inventory request q5 for differentiation) to the target reader, and correspondingly, the target reader receives the inventory request q5 from the target RAN.

The inventory request q5 may carry the information about the target tag, and is used to request the target reader to inventory the target tag. The target reader inventories the target tag in response to the inventory request q5, to obtain an inventory result. For example, the inventory result may include but is not limited to a device identification, a device status, or environment information corresponding to the target tag.

For step 4.4 to step 4.8 in the embodiment in FIG. 4, refer to the descriptions of step 4.4 to step 4.8 in the embodiment in FIG. 3. A difference lies in that the inventory requests in step 4.4 to step 4.8 in the embodiment in FIG. 4 further carry the information about the target tag.

5.1: The target reader sends the inventory result to the target RAN, and correspondingly, the target RAN receives the inventory result from the target reader.

After obtaining the inventory result in response to the inventory request q5 from the target RAN, the target reader may send the inventory result to the target RAN based on path information carried in the inventory request q5.

5.2: The target RAN sends the inventory result to the target AMF, and correspondingly, the target AMF receives the inventory result from the target RAN.

After receiving the inventory result from the target reader, the target RAN may send the inventory result to the target AMF based on path information carried in the inventory request q4.

5.3: The target AMF sends the inventory result to the target TMF, and correspondingly, the target TMF receives the inventory result from the target AMF.

After receiving the inventory result from the target RAN, the target AMF may send the inventory result to the target TMF based on path information carried in the inventory request q3.

5.4: The target TMF sends the inventory result to the NEF, and correspondingly, the NEF receives the inventory result from the target TMF.

After receiving the inventory result from the target AMF, the target TMF may send the inventory result to the NEF based on path information carried in the inventory request q2.

5.5: The NEF sends the inventory result to the AF, and correspondingly, the AF receives the inventory result from the NEF.

After receiving the inventory result from the target TMF, the NEF may send the inventory result to the AF based on path information carried in the inventory request q1.

It should be understood that for content that is not specifically described in the embodiment shown in FIG. 4, refer to related descriptions in the embodiment shown in FIG. 3. Details are not described herein again.

In the foregoing embodiment, the TMF may configure/update the mapping relationship between the reader and the area, and open the area to the AF. The UDM may subscribe to the mapping relationship between the tag and the TMF, so that the AF can carry the target tag to query the UDM for the appropriate TMF. When being connected to the AMF, the RAN carries the reader corresponding to the RAN, so that the AMF can store/update the mapping relationship between the reader and the RAN. When being connected to the TMF, the AMF carries the reader corresponding to the AMF, so that the TMF can store/update the mapping relationship between the reader and the AMF. Therefore, the TMF establishes a dynamic topology relationship between TMF-AMF-RAN-reader and the area. This enables a dynamic search process spanning the entire workflow from the AF to the reader.

In the embodiment shown in FIG. 4, the TMF may also configure a mapping relationship (denoted as a mapping relationship R7 for differentiation) between a reader and a tag, to replace the foregoing mapping relationship R2. Therefore, the inventory request q1 and the inventory request q2 may carry the information about the target tag, and do not need to carry the information about the target area. The target TMF can determine, based on the mapping relationship R7 and the target tag, the reader (namely, the target reader) corresponding to the target tag.

It should be noted that in embodiments shown in FIG. 3 and FIG. 4, an example in which the TMF and the AMF are separately deployed is used for description. In another embodiment, the TMF and the AMF may further be jointly deployed (for example, denoted as a first network element). The first network element is configured to implement functions implemented by the TMF and the AMF in the foregoing method embodiments. Details are not described herein again.

The foregoing describes in detail the methods in embodiments of this application. The following provides an apparatus for implementing any method in embodiments of this application. For example, an apparatus is provided, and includes units (or means) configured to implement steps performed by the network element/device in any one of the foregoing methods.

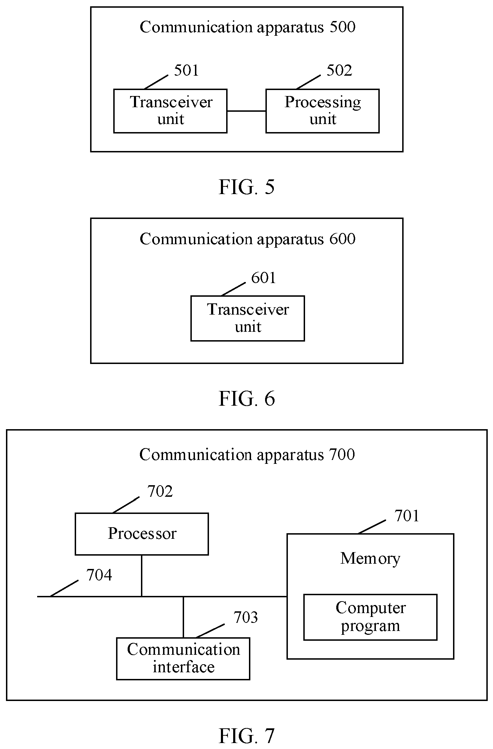

FIG. 5 is a diagram of a structure of a communication apparatus according to an embodiment of this application.

As shown in FIG. 5, the communication apparatus 500 may include a transceiver unit 501 and a processing unit 502. The transceiver unit 501 and the processing unit 502 may be software, hardware, or a combination of software and hardware.

The transceiver unit 501 may implement a sending function and/or a receiving function, and the transceiver unit 501 may also be described as a communication unit. The transceiver unit 501 may alternatively be a unit integrating an obtaining unit and a sending unit. The obtaining unit is configured to implement a receiving function, and the sending unit is configured to implement a sending function. Optionally, the transceiver unit 501 may be configured to receive information sent by another apparatus, and may be further configured to send information to the another apparatus.

In a possible design, the communication apparatus 500 may correspond to the tag management function network element in the foregoing method embodiment. For example, the communication apparatus 500 may be the tag management function network element in the foregoing method embodiment, or may be a chip in the tag management function network element. The communication apparatus 500 may include units configured to perform operations performed by the tag management function network element in the foregoing method embodiment. In addition, the units in the communication apparatus 500 are separately configured to implement the operations performed by the tag management function network element in the foregoing method embodiment. Description of the units is as follows.

The transceiver unit 501 is configured to send first information to a network repository function network element, where the first information includes information about an area corresponding to the tag management function network element.

The transceiver unit 501 is further configured to receive a first inventory request, where the first inventory request carries information about a target area, and the target area belongs to the area corresponding to the tag management function network element.

The processing unit 502 is configured to determine a first device serving a target reader corresponding to the target area.

The transceiver unit 501 is further configured to send a second inventory request to the first device.

In a possible implementation, the second inventory request carries information about the target reader.

In a possible implementation, the second inventory request carries information about the target reader and the information about the target area.

In a possible implementation, the first inventory request further carries information about a target tag, and the second inventory request carries information about the target reader and the information about the target tag.

In a possible implementation, when determining the first device serving the target reader corresponding to the target area, the processing unit 502 is specifically configured to: determine, based on a first mapping relationship, the first device serving the target reader corresponding to the target area, where the first mapping relationship includes a mapping relationship among a reader, an area, and a device serving the reader.

In a possible implementation, the device serving the reader includes an access and mobility management function network element and/or a radio access network device.

In a possible implementation, the transceiver unit 501 is further configured to receive, from an access and mobility management function network element, a mapping relationship between a reader and an access and mobility management function network element serving the reader.

In a possible implementation, the transceiver unit 501 is further configured to receive, from the access and mobility management function network element, an updated mapping relationship between a reader and the access and mobility management function network element serving the reader.

In a possible implementation, the transceiver unit 501 is further configured to receive, from a radio access network device, a mapping relationship between a reader and a radio access network device serving the reader.

In a possible implementation, the transceiver unit 501 is further configured to receive, from the radio access network device, an updated mapping relationship between a reader and the radio access network device serving the reader.

In another possible design, the communication apparatus 500 may correspond to the network repository function network element in the foregoing method embodiment. For example, the communication apparatus 500 may be the network repository function network element in the foregoing method embodiment, or may be a chip in the network repository function network element. The communication apparatus 500 may include units configured to perform operations performed by the network repository function network element in the foregoing method embodiment. In addition, the units in the communication apparatus 500 are separately configured to implement the operations performed by the network repository function network element in the foregoing method embodiment. Description of the units is as follows.

The transceiver unit 501 is configured to receive a query request from a network exposure function network element, where the query request carries information about a target area.

The processing unit 502 is configured to determine, based on a mapping relationship between an area and a tag management function network element, a target tag management function network element corresponding to the target area.

The transceiver unit 501 is further configured to send response information to the network exposure function network element, where the response information includes information about the target tag management function network element.

In a possible implementation, the transceiver unit 501 is further configured to receive, from a tag management function network element, a mapping relationship between the area and a tag management function network element.

In a possible implementation, the transceiver unit 501 is further configured to receive, from a tag management function network element, an updated mapping relationship between the area and a tag management function network element.

In still another possible design, the communication apparatus 500 may correspond to the unified data management network element in the foregoing method embodiment. For example, the communication apparatus 500 may be the unified data management network element in the foregoing method embodiment, or may be a chip in the unified data management network element. The communication apparatus 500 may include units configured to perform operations performed by the unified data management network element in the foregoing method embodiment. In addition, the units in the communication apparatus 500 are separately configured to implement the operations performed by the unified data management network element in the foregoing method embodiment. Description of the units is as follows.

The transceiver unit 501 is configured to receive a query request from a network exposure function network element, where the query request carries information about a target tag.

The processing unit 502 is configured to determine, based on a mapping relationship between a tag and a tag management function network element, a target tag management function network element corresponding to the target tag.

The transceiver unit 501 is further configured to send response information to the network exposure function network element, where the response information includes information about the target tag management function network element.

In a possible implementation, the processing unit 502 is further configured to: configure the mapping relationship between the tag and the tag management function network element.

In a possible implementation, the processing unit 502 is further configured to update the mapping relationship between the tag and the tag management function network element.

FIG. 6 is a diagram of a structure of another communication apparatus according to an embodiment of this application.

As shown in FIG. 6, the communication apparatus 600 may include a transceiver unit 601. The transceiver unit 601 may be software, hardware, or a combination of software and hardware.

The transceiver unit 601 may implement a sending function and/or a receiving function, and the transceiver unit 601 may also be described as a communication unit. The transceiver unit 601 may alternatively be a unit integrating an obtaining unit and a sending unit. The obtaining unit is configured to implement a receiving function, and the sending unit is configured to implement a sending function. Optionally, the transceiver unit 601 may be configured to receive information sent by another apparatus, and may be further configured to send information to the another apparatus.

In a possible design, the communication apparatus 600 may correspond to the network exposure function network element in the foregoing method embodiment. For example, the communication apparatus 600 may be the network exposure function network element in the foregoing method embodiment, or may be a chip in the network exposure function network element. The communication apparatus 600 may include units configured to perform operations performed by the network exposure function network element in the foregoing method embodiment. In addition, the units in the communication apparatus 600 are separately configured to implement the operations performed by the network exposure function network element in the foregoing method embodiment. Description of the units is as follows.

The transceiver unit 601 is configured to receive a first inventory request, where the first inventory request carries information about a target area.

The transceiver unit 601 is further configured to send a query request to a network repository function network element, where the query request carries the information about the target area.

The transceiver unit 601 is further configured to receive response information returned by the network repository function network element, where the response information includes information about a target tag management function network element corresponding to the target area.

The transceiver unit 601 is further configured to send a second inventory request to the target tag management function network element, where the second inventory request carries the information about the target area.

Alternatively, description of the units is as follows.

The transceiver unit 601 is configured to receive a first inventory request, where the first inventory request carries information about a target tag.

The transceiver unit 601 is further configured to send a query request to a unified data management network element, where the query request carries the information about the target tag.

The transceiver unit 601 is further configured to receive response information from the unified data management network element, where the response information includes information about a target tag management function network element corresponding to the target tag.

The transceiver unit 601 is further configured to send a second inventory request to the target tag management network element, where the second inventory request carries the information about the target tag.

In a possible implementation, the first inventory request and the second inventory request further carry information about a target area.

In another possible design, the communication apparatus 600 may correspond to the radio access network device in the foregoing method embodiment. For example, the communication apparatus 600 may be the radio access network device in the foregoing method embodiment, or may be a chip in the radio access network device. The communication apparatus 600 may include units configured to perform operations performed by the radio access network device in the foregoing method embodiment. In addition, the units in the communication apparatus 600 are separately configured to implement the operations performed by the radio access network device in the foregoing method embodiment. Description of the units is as follows.

The transceiver unit 601 is configured to receive a first inventory request, where the first inventory request carries information about a target reader, and the target reader corresponds to a target area.

The transceiver unit 601 is further configured to send a second inventory request to the target reader.

In a possible implementation, the first inventory request and the second inventory request carry information about the target area.

In a possible implementation, the first inventory request and the second inventory request carry information about a target tag.

In a possible implementation, when receiving the first inventory request, the transceiver unit 601 is specifically configured to receive the first inventory request from an access and mobility management function network element or a tag management function network element.

In a possible implementation, the transceiver unit 601 is further configured to send connection information to the access and mobility management function network element or the tag management function network element, where the connection information includes information about a reader corresponding to a radio access network device.

In a possible implementation, the transceiver unit 601 is further configured to send update information to the access and mobility management function network element or the tag management function network element, where the update information includes information about an updated reader corresponding to a radio access network device.

In still another possible design, the communication apparatus 600 may correspond to the access and mobility management function network element in the foregoing method embodiment. For example, the communication apparatus 600 may be the access and mobility management function network element in the foregoing method embodiment, or may be a chip in the access and mobility management function network element. The communication apparatus 600 may include units configured to perform operations performed by the access and mobility management function network element in the foregoing method embodiment. In addition, the units in the communication apparatus 600 are separately configured to implement the operations performed by the access and mobility management function network element in the foregoing method embodiment. Description of the units is as follows.

The transceiver unit 601 is configured to receive a first inventory request, where the first inventory request carries information about a target reader, and the target reader corresponds to a target area.

The transceiver unit 601 is further configured to send a second inventory request to a target radio access network device serving the target reader.

In a possible implementation, the first inventory request carries information about the target area, and the second inventory request carries information about the target area and information about the target reader.

In a possible implementation, the first inventory request carries information about a target tag, and the second inventory request carries the information about the target reader and the information about the target tag.

In a possible implementation, the transceiver unit 601 is further configured to receive first connection information from a radio access network device, where the first connection information includes information about a reader corresponding to the radio access network device.

In a possible implementation, the transceiver unit 601 is further configured to receive first update information from the radio access network device, where the first update information includes information about an updated reader corresponding to the radio access network device.

In a possible implementation, the transceiver unit 601 is further configured to send second connection information to a tag management function network element, where the second connection information includes information about a reader corresponding to an access and mobility management function network element.

In a possible implementation, the transceiver unit 601 is further configured to send second update information to the tag management function network element, where the second update information includes information about an updated reader corresponding to an access and mobility management function network element.

According to embodiments of this application, some or all of the units of the apparatuses shown in FIG. 5 and FIG. 6 may be combined into one or more other units, or one (or more) of the units may be further divided into a plurality of smaller functional units. In this way, same operations can be implemented without affecting implementation of technical effect of embodiments of this application. The foregoing units are obtained through division based on logical functions. During actual application, a function of one unit may be implemented by a plurality of units, or functions of a plurality of units may be implemented by one unit. In another embodiment of this application, an electronic device may alternatively include another unit. During actual application, the functions may be alternatively implemented with assistance of the another unit, and may be implemented by a plurality of units in collaboration.

It should be noted that, for implementations of the units, refer to corresponding descriptions of the corresponding method embodiment.

FIG. 7 is a diagram of a structure of still another communication apparatus according to an embodiment of this application. The communication apparatus 700 may include a memory 701 and a processor 702. Further, optionally, the communication apparatus 700 may further include a communication interface 703 and a bus 704. A communication connection among the memory 701, the processor 702, and the communication interface 703 is implemented through the bus 704. The communication interface 703 is configured to exchange data with another device.

The memory 701 is configured to provide storage space, and the storage space may store data such as an operating system and a computer program. The memory 901 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 702 is a module that performs an arithmetic operation and a logical operation, and may be one or a combination of processing modules such as a central processing unit (central processing unit, CPU), a graphics processing unit (graphics processing unit, GPU), or a microprocessor unit (microprocessor unit, MPU). The processor 702 may alternatively be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

In a possible design, the communication apparatus 700 may correspond to the tag management function network element, or the network exposure function network element, or the network repository function network element, or the unified data management network element, or the radio access network device, or the access and mobility management function network element in the foregoing method embodiment. For example, the communication apparatus 700 may be the tag management function network element, or the network exposure function network element, or the network repository function network element, or the unified data management network element, or the radio access network device, or the access and mobility management function network element in the foregoing method embodiment, and may further be a chip in the tag management function network element, or the network exposure function network element, or the network repository function network element, or the unified data management network element, or the radio access network device, or the access and mobility management function network element. The communication apparatus 700 may include components configured to perform operations performed by the tag management function network element, or the network exposure function network element, or the network repository function network element, or the unified data management network element, or the radio access network device, or the access and mobility management function network element in the foregoing method embodiment. In addition, the components in the communication apparatus 700 are separately configured to implement the operations performed by the tag management function network element, or the network exposure function network element, or the network repository function network element, or the unified data management network element, or the radio access network device, or the access and mobility management function network element in the foregoing method embodiment. The processor 702 invokes the computer program stored in the memory 701, to perform the method shown in the foregoing method embodiment.

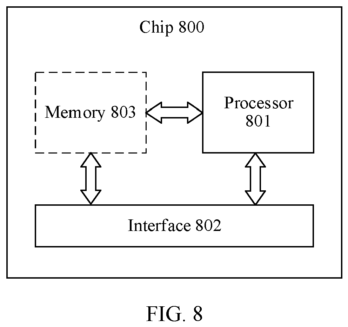

For a case in which the communication apparatus may be the chip or a chip system, refer to a diagram of a structure of a chip shown in FIG. 8.

As shown in FIG. 8, the chip 800 includes a processor 801 and an interface 802. There may be one or more processors 801, and there may be a plurality of interfaces 802. It should be noted that a function corresponding to each of the processor 801 and the interface 802 may be implemented by using a hardware design, or may be implemented by using a software design, or may be implemented by combining software and hardware. This is not limited herein.

Optionally, the chip 800 may further include a memory 803, and the memory 803 is configured to store necessary program instructions and data.

In this application, the processor 801 may be configured to invoke, from the memory 803, a program for implementing the communication method provided in one or more embodiments of this application on the electronic device, and execute instructions included in the program. The interface 802 may be configured to output an execution result of the processor 801. In this application, the interface 802 may be specifically configured to output messages or information about the processor 801.

For the communication method provided in one or more embodiments of this application, refer to the foregoing embodiments. Details are not described herein again.

According to the method provided in embodiments of this application, an embodiment of this application further provides a computer-readable storage medium. The computer-readable storage medium stores a computer program or instructions. When the computer program or the instructions are run on a processor, the method shown in the foregoing method embodiment may be implemented.

According to the method provided in embodiments of this application, an embodiment of this application further provides a computer program product. The computer program product includes a computer program or instructions. When the computer program or the instructions are run on a processor, the method shown in the foregoing method embodiment may be implemented.

According to the method provided in embodiments of this application, an embodiment of this application further provides a communication system. The communication system includes at least one of the foregoing communication apparatus 500, or communication apparatus 600, or communication apparatus 700, or chip 800.

According to the method provided in embodiments of this application, an embodiment of this application further provides a communication system. The communication system includes a tag management function network element and a network exposure function network element. The tag management function network element is configured to perform steps performed by the tag management function network element in the foregoing method embodiment, and the network exposure function network element is configured to perform steps performed by the network exposure function network element in the foregoing method embodiment.

Optionally, the communication system further includes at least one of a network repository function network element, a unified data management network element, a radio access network device, and an access and mobility management function network element. The network repository function network element is configured to perform steps performed by the network repository function network element in the foregoing method embodiment, the unified data management network element is configured to perform steps performed by the unified data management network element in the foregoing method embodiment, the radio access network device is configured to perform steps performed by the radio access network device in the foregoing method embodiment, and the access and mobility management function network element is configured to perform steps performed by the access and mobility management function network element in the foregoing method embodiment.

It may be understood that the memory in embodiments of this application may be a volatile memory or a non-volatile memory, or may include a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this specification aims to include but is not limited to these memories and any memory of another appropriate type.

All or some of the foregoing embodiments may be implemented by using software, hardware, firmware, or any combination thereof. When software is used for implementation, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the technologies, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, applied to a tag management function network element, and comprising:
sending first information to a network repository function network element, wherein the first information comprises information about an area corresponding to the tag management function network element;
receiving a first inventory request, wherein the first inventory request carries information about a target area, and the target area belongs to the area corresponding to the tag management function network element;
determining a first device serving a target reader corresponding to the target area; and
sending a second inventory request to the first device.

2. The method according to claim 1, wherein the first inventory request further carries information about a target tag, and the second inventory request carries information about the target reader and the information about the target tag.

3. The method according to claim 1 or 2, wherein the determining the first device serving the target reader corresponding to the target area comprises:
determining, based on a first mapping relationship, the first device serving the target reader corresponding to the target area, wherein
the first mapping relationship comprises a mapping relationship among a reader, an area, and a device serving the reader.

4. The method according to claim 3, wherein the device serving the reader comprises an access and mobility management function network element and/or a radio access network device.

5. The method according to claim 3 or 4, further comprising:
receiving, from an access and mobility management function network element, a mapping relationship between a reader and an access and mobility management function network element serving the reader.

6. The method according to any one of claims 3 to 5, further comprising:
receiving, from a radio access network device, a mapping relationship between a reader and a radio access network device serving the reader.

7. A communication method, applied to a network exposure function network element, and comprising:
receiving a first inventory request, wherein the first inventory request carries information about a target area;
sending a query request to a network repository function network element, wherein the query request carries the information about the target area;
receiving response information returned by the network repository function network element, wherein the response information comprises information about a target tag management function network element corresponding to the target area; and
sending a second inventory request to the target tag management function network element, wherein the second inventory request carries the information about the target area.

8. A communication method, applied to a network exposure function network element, and comprising:
receiving a first inventory request, wherein the first inventory request carries information about a target tag;
sending a query request to a unified data management network element, wherein the query request carries the information about the target tag;
receiving response information from the unified data management network element, wherein the response information comprises information about a target tag management function network element corresponding to the target tag; and
sending a second inventory request to the target tag management network element, wherein the second inventory request carries the information about the target tag.

9. The method according to claim 8, wherein the first inventory request and the second inventory request further carry information about a target area.

10. A communication method, applied to a network repository function network element, and comprising:
receiving a query request from a network exposure function network element, wherein the query request carries information about a target area;
determining, based on a mapping relationship between an area and a tag management function network element, a target tag management function network element corresponding to the target area; and
sending response information to the network exposure function network element, wherein the response information comprises information about the target tag management function network element.

11. The method according to claim 10, further comprising:
receiving, from a tag management function network element, a mapping relationship between the area and a tag management function network element.

12. The method according to claim 10 or 11, further comprising:
receiving, from a tag management function network element, an updated mapping relationship between the area and a tag management function network element.

13. A communication method, applied to a unified data management network element, and comprising:
receiving a query request from a network exposure function network element, wherein the query request carries information about a target tag;
determining, based on a mapping relationship between a tag and a tag management function network element, a target tag management function network element corresponding to the target tag; and
sending response information to the network exposure function network element, wherein the response information comprises information about the target tag management function network element.

14. A communication method, comprising:
sending, by a tag management function network element, first information to a network repository function network element, wherein the first information comprises information about an area corresponding to the tag management function network element;
receiving, by a network exposure function network element, a first inventory request, wherein the first inventory request carries information about a target area;
sending, by the network exposure function network element, a query request to the network repository function network element, wherein the query request carries the information about the target area;
receiving, by the network exposure function network element, response information from the network repository function network element, wherein the response information comprises information about the tag management function network element corresponding to the target area;
sending, by the network exposure function network element, a second inventory request to the tag management function network element, wherein the second inventory request carries the information about the target area; and
determining, by the tag management function network element, a first device serving a target reader corresponding to the target area, and sending a third inventory request to the first device.

15. A communication method, comprising:
receiving, by a network exposure function network element, a first inventory request, wherein the first inventory request carries information about a target area and information about a target tag;
sending, by the network exposure function network element, a query request to a unified data management network element, wherein the query request carries the information about the target tag;
receiving, by the network exposure function network element, response information from the unified data management network element, wherein the response information comprises information about a tag management function network element corresponding to the target tag;
sending, by the network exposure function network element, a second inventory request to the tag management function network element, wherein the second inventory request carries the information about the target area; and
determining, by the tag management function network element, a first device serving a target reader corresponding to the target area, and sending a third inventory request to the first device.

16. A communication apparatus, comprising a unit configured to perform the method according to any one of claims 1 to 6, or a unit configured to perform the method according to claim 7, or a unit configured to perform the method according to claim 8 or 9, or a unit configured to perform the method according to any one of claims 10 to 12, or a unit configured to perform the method according to claim 13, or a unit configured to perform the method according to claim 14, or a unit configured t perform the method according to claim 15.

17. A communication apparatus, comprising a processor, wherein the processor is configured to execute a computer program or instructions, and when the processor executes the computer program or the instructions, the method according to any one of claims 1 to 6 is implemented, or the method according to claim 7 is implemented, or the method according to claim 8 or 9 is implemented, or the method according to any one of claims 10 to 12 is implemented, or the method according to claim 13 is implemented, or the method according to claim 14 is implemented, or the method according to claim 15 is implemented.

18. A computer-readable storage medium, wherein the computer-readable storage medium stores a computer program or instructions, and when the computer program or instructions are executed, the method according to any one of claims 1 to 6 is implemented, or the method according to claim 7 is implemented, or the method according to claim 8 or 9 is implemented, or the method according to any one of claims 10 to 12 is implemented, or the method according to claim 13 is implemented, or the method according to claim 14 is implemented, or the method according to claim 15 is implemented.

19. A computer program product, comprising a computer program or instructions, wherein when the computer program or instructions are executed, the method according to any one of claims 1 to 6 is implemented, or the method according to claim 7 is implemented, or the method according to claim 8 or 9 is implemented, or the method according to any one of claims 10 to 12 is implemented, or the method according to claim 13 is implemented, or the method according to claim 14 is implemented, or the method according to claim 15 is implemented.

20. A communication system, comprising a tag management function network element and a network exposure function network element, wherein the tag management function network element is configured to perform the method according to any one of claims 1 to 6, and the network exposure function network element is configured to perform the method according to any one of claims 7 to 9.

21. The system according to claim 20, wherein the communication system further comprises at least one of a network repository function network element and a unified data management network element, the network repository function network element is configured to perform the method according to any one of claims 10 to 12, and the unified data management network element is configured to perform the method according to claim 13.
